# EUROPÄISCHE PATENTSCHRIFT

(11) **EP 2 390 605 B1**
(45) Veröffentlichungstag und Bekanntmachung des Hinweises auf die Patenterteilung: **29.04.2015**
(21) Anmeldenummer: 11167644.1
(22) Anmeldetag: 26.05.2011
(51) Int. Cl.: F26B 3/28, F26B 9/08, F26B 25/00, F26B 23/00, F26B 25/04, F26B 25/10, F26B 25/12, F26B 3/20

(54) **Trocknungsanlage für Biomasse und/oder Schlämme und Verfahren hierzu**
Drying plant for biomass and/or sludge and related method
Installation de séchage pour biomasse et/ou boues et procédé associé

(30) Priorität: 26.05.2010 DE 102010017097
(43) Veröffentlichungstag der Anmeldung: 30.11.2011
(73) Patentinhaber: Entsorgungstechnik Kraus Martin e.K., 92648 Vohenstrauss (DE)
(72) Erfinder: Kraus, Martin, 92648 Vohenstrauß (DE)
(74) Vertreter: Lang, Christian

(56) Entgegenhaltungen:
- EP-A1- 0 458 221
- EP-A1- 1 621 523
- DE-A1- 4 315 321
- DE-A1- 10 336 685
- DE-A1-102007 032 117
- FR-A1- 2 927 693

## Beschreibung

### HINTERGRUND DER ERFINDUNG

### GEBIET DER ERFINDUNG

Die vorliegende Erfindung betrifft eine Trocknungsanlage für Biomasse und/oder Schlämme nach dem Oberbegriff des Anspruchs 1 sowie ein entsprechendes Verfahren nach dem Oberbegriff des Anspruchs 9.

### STAND DER TECHNIK

Vorrichtungen zum Trocknen von S chlamm, Feuchtgut oder dgl. sind beispielsweise aus der EP 1 621 523 Al, welche eine Trocknungsanlage für Biomasse und/oder Schlämme nach dem Oberbegriff des Anspruchs 1 offenbart, DE 103 36 685 Al, DE 10 2006 021 131 Al, DE 43 15 321 Al, DE 34 40 484 Al, DE 10 2007 032 117 Al und DE 20 2008 005 798 U1 bekannt.

Bei diesen bekannten Trocknungsanlagen für Biomasse und/oder Schlamm wird das zu trocknende Gut (Trocknungsgut) auf einem beheizten Boden einer Trocknungshalle ausgebreitet und durch entsprechende Fördereinrichtungen in der Trocknungshalle von einer Auftragsseite, bei der das zu trocknende Gut in die Trocknungshalle eingebracht wird, auf eine Austtagsseite, bei der das getrocknete Gut (Trockengut) aus der Anlage entnommen wird, bewegt.

Aus dem Stand der Technik ist es zudem bekannt, die Trocknungshallen so auszubilden, dass bei Sonneneinstrahlung die Sonnenenergie zur Erwärmung und somit zur Trocknung des zu trocknenden Guts mit eingesetzt wird. Beispielsweise können derartige Trocknungshallen in Art eines Gewächshauses ausgebildet sein.

Obwohl mit derartigen Trocknungsanlagen bereits Biomasse und Schlamm getrocknet werden kann, besteht ein ständiger Bedarf darin, die Effizienz derartiger Anlagen zu verbessern, d. h. den Energiebedarf für die Trocknung zu reduzieren und/oder leicht verfügbare Energie einzusetzen.

Darüber hinaus kommt es bei den bekannten Trocknungsanlagen zu nicht unerheblichen Geruchsbelästigungen der Umwelt, die dazu führen, dass die Akzeptanz derartiger Anlagen gering sein kann.

### OFFENBARUNG DER ERFINDUNG

### AUFGABE DER ERFINDUNG

Es ist deshalb Aufgabe der vorliegenden Erfindung eine Trocknungsanlage für Biomasse und/oder Schlamm sowie ein entsprechendes Verfahren zur Trocknung von Biomasse und/oder Schlamm bzw. zum Betrieb einer entsprechenden Trocknungsanlage bereitzustellen, bei dem die oben angesprochenen Probleme des Standes der Technik vermieden bzw. Erfordernisse, die sich aus dem Stand der Technik ergeben, erreicht werden können. Insbesondere soll eine Trocknungsanlage und ein entsprechendes Verfahren bereit gestellt werden, welche in einfacher Weise eine Verringerung des Energiebedarfs einer derartigen Trocknungsanlage ermöglichen und/oder eine geschickte Nutzung vorhandener Energie bieten. In diesem Zusammenhang soll auch die Möglichkeit einer effizienten Wärmespeicherung geschaffen werden. Außerdem soll die Problematik der Geruchsbelästigung durch derartige Anlagen verringert bzw. beseitigt werden.

### TECHNISCHE LÖSUNG

Diese Aufgabe wird gelöst durch eine Trocknungsanlage mit den Merkmalen des Anspruchs 1 sowie einem Verfahren zum Betrieb einer Trocknungsanlage mit den Merkmalen des Anspruchs 9. Vorteilhafte Ausgestaltungen sind Gegenstand der abhängigen Ansprüche.

Die erfindungsgemäße Trocknungsanlage zeichnet sich dadurch aus, dass die mit der Feuchtigkeit des zu trocknenden Gutes angereicherte Abluft nicht einfach an die Umgebung abgegeben wird, sondern die enthaltene Wärmeenergie durch Wärmerückgewinnung zur weiteren Trocknung von Trocknungsgut eingesetzt wird und die Abluft gereinigt wird, um Emissionen zu vermeiden. Insbesondere die Kombination der Wärmerückgewinnung einerseits und der Abluftreinigung andererseits führt zu Synergien, die einen vorteilhaften Betrieb einer entsprechenden Trocknungsanlage ermöglichen. So können für die Abluftreinigung sogenannte Bio-filter eingesetzt werden, bei denen Mikroorganismen die entsprechende Reinigung der Abluft, insbesondere auch im Hinblick auf die Entfernung von geruchsbelastenden Inhaltsstoffen übernehmen. Durch die Wärmerückgewinnung kann eine konstante Betriebstemperatur für die entsprechende Abluftreinigung mittels Biofilter gewährleistet werden, da durch entsprechende Wärmeentnahme aus der Abluft für alle Betriebsbedingungen eine in engen Bereichen konstante Ablufttemperatur eingestellt werden kann. Neben der Wärmerückgewinnung kann die Temperatureinstellung der Abluft aus der Trocknungsanlage durch entsprechende Luftführung innerhalb der Trocknungsanlage und/oder Mischen mit Frischluft unterstützt werden.

Nach einem weiteren Aspekt der vorliegenden Erfindung werden verschiedene Maßnahmen getroffen, um ein möglichst geschlossenes System zu realisieren, welches Emissionen weitestgehend vermeidet. So ist eine automatisierte Entnahmevorrichtung für das getrocknete Gut, z.B. eine Förderanlage für das getrocknete Gut zur Einlagerung in einem geschlossenen Behälter für den Abtransport, z.B. einem Silo, insbesondere einem Silo-Auflieger für ein Kraftfahrzeug, vorgesehen, bei welcher eine Anordnung zur Verdrängungsluftrückführung vorgesehen ist. Wie sich leicht feststellen lässt, muss bei einem geschlossenen Behälter, wie z. B. einem Silo-Tank, bei dem etwas hinein gefüllt werden soll, zumindest ein Teil der Luft entweichen. Aufgrund der Form des getrockneten Gutes, welches vorzugsweise als trockenes Granulat vorliegt, könnte bei einer einfachen Befüllung eines offenen Behälters entsprechender Staub als Emission entstehen und aus dem offenen Behälter entweichen. Bei einer Entnahmevorrichtung, bei der das getrocknete Gut in einem geschlossenen System in einen geschlossenen Behälter für den Abtransport eingebracht wird, kann die Emission von entsprechendem Staub durch eine Verdrängungsluftführung zurück in die Trocknungshalle vermieden werden. Außerdem werden geruchsbelastete Gase nicht in die Umgebung freigesetzt. Der Staub kann zudem in der Verdrängungsluftrückführung mit einem Filter aus der Luft entfernt werden.

Weiterhin kann eine Beschickungsvorrichtung mit einem abschließbaren Annahmebunker vorgesehen sein, um weiterhin zu gewährleisten, dass keine Emissionen die Trocknungsanlage verlassen. Bei dem abschließbaren Annahmebunker kann entweder wiederum ein geschlossenes System etabliert werden, bei dem beispielsweise aus einem geschlossenen Behälter des Anlieferfahrzeugs direkt über eine Schlauchleitung das zu trocknende Gut in den Annahmebunker eingefüllt wird, so dass keine Emissionen freigesetzt werden können. Alternative kann der abschließbare Annahmebunker für die Beschickung auch kurz geöffnet werden, um danach jedoch wieder schnell verschlossen zu werden.

Das Abluft-Reinigungssystem, welches bei der erfindungsgemäßen Trocknungsanlage vorgesehen ist, kann einen Befeuchter, Wäscher, Konditionierer und/oder Tropfenabscheider umfassen. Durch den Wäscher wird eine erste Reinigung erzielt und die chemische Zusammensetzung der Abluft kann durch einen entsprechenden Konditionierer eingestellt werden. Beispielsweise kann bei einem zu hohen NH₃-Gehalt dem Wasser des Wäschers Säure zugesetzt werden, um eine entsprechende Einstellung der chemischen Zusammensetzung auch für nachfolgende Verfahrensabschritte zu ermöglichen.

So kann das Abluftreinigungssystem ein oder mehrere Biofiltermodule umfassen, bei denen über entsprechende biochemische Prozesse die Abluft gereinigt werden kann.

Zudem kann im Abluftreinigungssystem ein Schritt vorgesehen sein, bei dem durch photolytische Oxidation die Abluft weiter gereinigt wird, um Kontaminationen der Umgebung bzw. eine Geruchsbelästigung der Umgebung zu vermeiden.

Die erfindungsgemäß vorgesehene Wärmerückgewinnung kann auf unterschiedliche Art und Weise erfolgen. Eine erste einfache Möglichkeit besteht darin, einen Luft-Luft-Wärmetauscher vorzusehen, bei dem die warme feuchte Abluft im Gegenstromverfahren an der einströmenden Frischluft vorbeigeführt wird, wobei über einen entsprechenden Wärmeaustausch über die benachbarten Kanalsysteme für Zuluft und Abluft hinweg die Wärme in der Trocknungsanlage behalten werden kann und der nachgeschalteten Abgasreinigungsanlage eine Abluft mit einem konstanten Temperaturbereich übergeben werden kann, was insbesondere bei der Verwendung von Biofiltern vorteilhaft ist.

Die Wärmerückgewinnung kann jedoch auch über andere Arten von Wärmetauschern erfolgen, beispielsweise durch Luft-Flüssigkeits-Wärmetauscher, bei denen die Wärme der feuchten Ausgangsluft auf eine Flüssigkeit übertragen wird, die beispielsweise in einem Wärmespeicher zwischengespeichert werden kann, um sie zu Zeiten, in denen die Abwärme zur Heizung der Trocknungsanlage nicht erforderlich ist, zu speichern und in Zeiten, in denen eine zusätzlich Heizung der Trocknungsanlage erforderlich ist, wieder abzugeben. Zudem kann mit der erwärmten Flüssigkeit direkt ohne Zwischenschaltung eines Wärmespeichers auch die Fußbodenheizung der Trocknungsanlage betrieben oder unterstützt werden. Darüber hinaus können eine oder mehrere Wärmepumpen dem Wärmetauscher nachgeschaltet werden, um die Temperatur der Flüssigkeit weiter zu erhöhen, um so die Flüssigkeit direkt in der Fußbodenheizung verwenden zu können oder höhere Temperaturen im Wärmespeicher zu erreichen.

Ein entsprechender Wärmespeicher, für den selbstständig und in Kombination mit den anderen Aspekten der Erfindung Schutz begehrt wird, kann durch einen Flüssigkeitserdspeicher gebildet werden, der so aufgebaut ist, dass ein innerer Behälter vorgesehen ist, in welchem eine Speicherflüssigkeit gelagert ist, die entweder selbst durch einen angeschlossenen Wärmetauscher gepumpt wird oder in die wiederum ein Wärmetauscher, z.B. eine Wärmetauscherwendel eintaucht. Der innere Behälter kann beispielsweise aus Edelstahl gebildet sein und im einfachsten Fall mit Wasser gefüllt werden.

Um den inneren Behälter ist eine erste Isolierschicht ausgebildet, die beispielsweise aus einer Polyurethan (PU) - Isolierung besteht. Die Isolierung bzw. Wärmedämmung ist mit dem inneren Behälter in einem äußeren Behälter aufgenommen, der beispielsweise aus einem Betonbehälter gebildet sein kann. Der Betonbehälter kann insbesondere aus einem Stück oder wenigen Teilen gegossen sein. Vor allem eine untere Behälterschale kann monolithisch gefertigt sein.

Um den äußeren Behälter ist eine weitere Isolierschicht/Wärmedämmung vorgesehen, die aus Glasschaumschotter gebildet sein kann. Um diese zweite Isolierschicht ist eine wasserdichte Kunststofffolie angeordnet, die um den gesamten Erdwärmespeicher herum geführt ist, um ein Eindringen von Feuchtigkeit oder Wasser in die zweite Isolierschicht aus Schaumglasschotter zu vermeiden, da durch Feuchtigkeit und Wasser Wärmebrücken entstehen können, welche die Isoliereigenschaften der zweiten Isolierschicht beeinträchtigen könnten. Lediglich einige wasserdicht angeschlossene Zu- und Ableitungen durchdringen die umgebende Kunststofffolie, um beispielsweise Flüssigkeit für den Wärmeaustausch in den Behälter pumpen oder aus diesem entnehmen zu können.

Mit einem derartigen Erdwärmespeicher ist somit ein drei-schaliger Behälter gegeben, dessen erste Schale durch den inneren Behälter, dessen zweite Schale durch den äußeren Behälter und dessen dritte Schale durch die umgebende Kunststofffolie gegeben sind. Durch das Vorsehen von Isolierschichten zwischen den einzelnen Schalen ist eine effektive Wärmespeicherung möglich. Damit kann überschüssige Energie der Trocknungsanlage, beispielsweise bei starker Sonneneinstrahlung, gespeichert und bei größerem Energiebedarf, beispielsweise an kalten Tagen ohne Sonnenstrahlung, wieder der Trocknungsanlage zugeführt werden.

Zur Steigerung der Energieeffizienz kann die Gebäudehülle transparente Teile umfassen, die es gewährleisten, dass bei Sonneneinstrahlung eine direkte solare Heizung gegeben ist. Zudem kann zur Steigerung der Energieeffizienz die Gebäudehülle Luftkammern umfassen, wobei die Luftkammern durch ein von mindestens einer Folie, vorzugsweise jedoch mindestens zwei Folien umgebenes Volumen gebildet wird.

Die die Luftkammern umgebenden Folien können eine entsprechend hohe Lichtdurchlässigkeit und Reißfestigkeit aufweisen sowie mit VA-Zusätzen (UV(ultra violett)-Stabilisatoren), IR(infrarot)-Zusätzen und Antitau-Additiven so eingestellt werden, dass die Luftkammern nicht nur eine Wärmedämmung bilden, sondern zugleich als solare Heizung dienen. Nach einem weiteren Aspekt der vorliegenden Erfindung, kann in der Trocknungshalle eine abgehängte Decke vorgesehen sein, so dass die Trocknungshalle in zwei übereinander angeordnete Räume unterteilt wird. Dadurch wird zum einen der eigentliche Trocknungsraum in seinem Volumen begrenzt, so dass eine geringere Wärmemenge zur Aufheizung ausreicht. Darüber hinaus kann in dem darüber angeordneten Raum die Zuluft bereits vorgewärmt werden, so dass insgesamt zusammen mit einer weiteren Wärmedämmwirkung eine Steigerung der Energieeffizienz möglich ist.

Außerdem dient die Zweiteilung der Trocknungshalle dazu eine geeignete Luftführung zu ermöglichen, die insbesondere zusammen mit der Wärmerückgewinnung und der solaren Heizung der Trocknungsanlage eine optimale Prozessführung ermöglicht. So kann Frischluft in dem oberen Bereich vorgewärmt werden und zugleich ist es möglich Abluft in gewünschten Mengen mit Frischluft zu vermischen und entsprechende Anteile der Abluft im Umluftverfahren wieder in den unteren Bereich der Trocknungshalle einzuführen. Außerdem kann durch die Mischung von frischer Zuluft und Abluft zusätzlich zur Wärmerückgewinnung eine optimale Abgastemperatur eingestellt werden, sodass die Reinigung der Abluft immer unter optimalen Bedingungen erfolgt.

Die Trocknungsanlage kann vollautomatisiert betrieben werden, wobei durch eine Steuerungs- und/oder Regelungseinrichtung der entsprechende Verfahrensablauf mit geeigneter Heizung der Trocknungsfläche in der Trocknungshalle, abgestimmter Anpassung der Schüttdicke des zu trocknenden Gutes auf der Heizfläche sowie Einstellung der Bewegungsgeschwindigkeit des zu trocknenden Gutes durch die Trocknungshalle gesteuert und/oder bei Einsatz entsprechender Sensoren geregelt werden kann und auf das vorgegebene Trocknungsziel angepasst werden kann.

Die Anlage insgesamt und insbesondere Teile der Anlage mit Öffnungen zur Umgebung werden im Unterdruck betrieben, so dass keine unerwünschten Entweichungen von Luft stattfinden können. Der Unterdruck kann durch geeignete Gebläse bzw. Ansaugvorrichtungen an den Abluftausgängen erreicht werden. Beispielsweise kann der Annahmebunker, bei dem das zu trocknende Gut in die Trocknungsanlage eingebracht wird, mit einer Saugvorrichtung ausgestattet sein, die Luft ansaugt und an die Trocknungshalle abgibt.

Die Bewegungsgeschwindigkeit der zu trocknenden Biomasse und/oder des Schlamms ist am Beginn der Bewegung, also auf der Eintragsseite der Trocknungshalle klein, während zum Ende der Bewegung hin, also auf der Austragsseite erfolgt die Bewegung schneller als an der Eintragsseite. Dies führt gleichzeitig zu der Einstellung, dass die Schüttdicke des zu trocknenden Gutes an der Eintragsseite größer sein kann als an der Austragsseite. Zu Beginn der Trocknung kann also das zu trocknende Gut in einer größeren Dicke angeordnet sein, während es zum Ende der Trocknung in einer relativen dünnen Schicht vorliegt, um eine vollständige Trocknung zu bewirken.

Desweiteren stellt die Verwendung von Abwärme, insbesondere aus der Biogas-Erzeugung, für die Heizung der Trocknungsanlage einen Aspekt dar, der selbstständig und in Kombination mit den anderen Aspekten unter Schutz gestellt werden soll.

### KURZE BESCHREIBUNG DER FIGUREN

Weitere Vorteile, Kennzeichen und Merkmale der vorliegenden Erfindung werden bei der nachfolgenden detaillierten Beschreibung eines Ausführungsbeispiels anhand der beigefügten Zeichnung deutlich. Die Zeichnungen zeigen hierbei in:
- Figur 1: einen schematischen Überblick über den Aufbau einer erfindungsgemäßen Trocknungsanlage; und in
- Figur 2: einen Schnitt durch einen erfindungsgemäßen Erd-Wärmespeicher.

### AUSFÜHRUNGSBEISPIEL

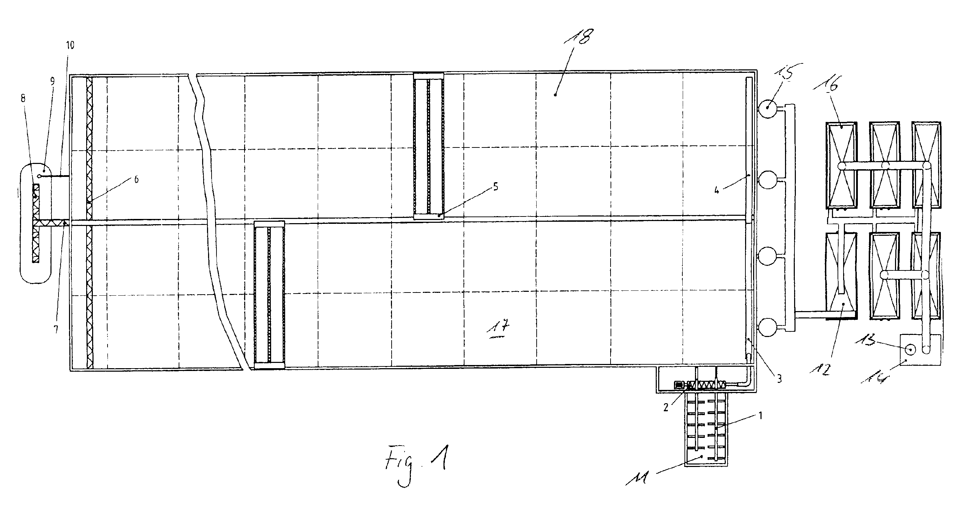

Die Figur 1 zeigt in einer schematischen Draufsicht den Überblick über eine erfindungsgemäße Trocknungsanlage, bei welcher über einem Annahmebunker 11 zu trocknendes Gut, wie beispielsweise Biomasse, Schlamm, insbesondere Klärschlamm oder dergleichen eingebracht werden kann. Der Annahmebunker 11 weist einen Verschluss (nicht gezeigt) auf, so dass der Annahmebunker 11 üblicherweise verschlossen ist. Lediglich, wenn zu trocknendes Gut in den Annahmebunker 11 eingefüllt werden soll, beispielsweise wenn eine Anlieferung eines Klärschlamms mit einem Fahrzeug erfolgt, wird der Annahmebunker 11 kurzzeitig geöffnet, die Fahrzeugladung in den Annahmebunker 11 eingefüllt und der Annahmebunker sofort wieder verschlossen, um Emissionen aus dem Annahmebunker zu vermeiden. Vorzugsweise kann der Annahmebunker 11 auch so ausgestaltet sein, dass Fahrzeugladungen direkt über ein abgeschlossenes System, beispielsweise ein Schlauchsystem oder dergleichen in den Annahmebunker 11 eingefüllt werden, um Emissionen zu vermeiden. Zusätzlich kann ein System zur Erzeugung von Unterdruck installiert sein, sodass Luft ins Innere der Anlage gesaugt wird, um zu vermeiden, dass Luft aus der Anlage entweicht.

Im Annahmebunker 11 ist ein Schubboden 1 vorgesehen, der das eingefüllte Gut in Richtung einer Dickstoffpumpe 2 bewegt. Mit der Dickstoffpumpe bzw. Dickstoffförderpumpe 2 wird das zu trocknende Gut auf ein Horizontalförderband 3, 4 geleitet, so dass das zu trocknende Gut über die Breite der Trocknungshalle 18 verteilt werden kann. Bei dem Horizontalförderband 3, 4 ist ein Teil 3 starr ausgebildet, während das andere Teil 4 automatisch verstellbar ist, um bestimmen zu können, in welcher Breite die Trocknungshalle 18 mit zu trocknendem Gut beaufschlagt wird. Entsprechend kann das automatisch verstellbare Teil 4 des Horizontalförderbandes 3, 4 eingezogen werden, so dass nur Material über den starren Teil 3 des Horizontalförderbandes 3, 4 in einen Teil, z.B. eine Hälfte der Trocknungshalle 18 gelangt. Anstelle des Schubbodens und der Dickstoffpumpe können auch andere Fördermechanismen eingesetzt, wie beispielsweise Förderschnecken oder dergleichen.

Bei allen Fördermechanismen, bei denen noch nasses Trocknungsgut gefördert wird, können Warmluftgebläse vorgesehen sein, um eine erste Vortrocknung zu bewirken. Dies hat den positiven Effekt, dass die Fördergeräte in gewisser Weise selbstreinigend sind, da durch die Warmluft anhaftendes Trocknungsgut trocknet und im trockenen Zustand eine geringere Haftung aufweist, so dass es sich bei weiterem Transport von dem Fördergerät wieder löst.

Die Trocknungshalle 18 ist unterteilt in eine Vielzahl von Heizflächen bzw. -feldern 17, die unabhängig voneinander gesteuert und betrieben werden können, so dass für jede Heizfläche 17 die entsprechende Temperatur und Wärmemenge beliebig eingestellt werden kann.

Die Heizflächen 17 weisen eine Fußbodenheizung auf, die beispielsweise durch Verlegung von Heizschlangen im Boden der Trocknungshalle 18 realisiert sein kann. Durch Verwendung kleinteiliger Felder, die separat heiz- und steuerbar sind, ist eine exakte Temperatureinstellung möglich. Die Schleifen der Fußbodenheizung sind vorzugsweise mit der Längserstreckung der Heizungsrohre quer zur Transportrichtung des Trocknungsgutes verlegt, sodass quer zur Transportrichtung des Trocknungsgutes eine gleiche Temperatur gewährleistet wird.

Die erfindungsgemäße Trocknungsanlage wird vorzugsweise durch Abwärme aus einer Biogasanlage erwärmt, so dass vorzugsweise die als Abfall anfallende Biomasse der Biogasanlage mit Abwärme der Biogasanlage getrocknet werden kann.

In der Trocknungshalle 18 sind bei dem gezeigten Ausführungsbeispiel zwei Längsräumer 5 vorgesehen, die das zu trocknende Gut von der Einfüll- bzw. Eintragsseite bei den Bandförderanlagen 3, 4 zu der Ausgabe- bzw. Austragsseite mit einer Trockengut-Austragsverteilerschnecke 8 fördern. Statt der im Ausführungsbeispiel gezeigten zwei Längsräumer 5 können mehr oder weniger Längsräumer eingesetzt werden. Die Längsräumer 5 können in jeder geeigneten Form ausgebildet sein, beispielsweise mit entsprechenden Zacken, Schilden und dergleichen, wobei die Längsräumer 5 auch eine Umwälzung und Durchmischung des zu trocknenden Gutes bewirken können. Entsprechend können die Längsräumer 5 nicht nur eine lineare Bewegung zum Transport des zu trocknenden Gutes von einer Seite zur anderen Seite der Trocknungshalle 18 ausführen, sondern unter Umständen auch überlagerte Querbewegungen hierzu, so dass sich gewisse Zickzack-Bewegungen ergeben und das zu trocknende Gut auch in einer Richtung quer zur Hauptbewegungsrichtung bewegt und mit anderem zu trocknendem Gut durchmischt wird. Die Längsräumer können Endlos-Förderbänder umfassen, die im Kreis bewegt werden und hierbei entsprechende Mitnehmer zum Transport des Trocknungsguts aufweisen können.

Die Längsräumer 5 können auch so ausgebildet sein, dass sie das zu trocknende Gut mit einer unterschiedlichen Dicke oder Höhe des zu trocknenden Gutes bewegen. Dies kann je nach Bedarf entsprechend eingestellt werden.

Darüber hinaus können die Längsräumer auch so ausgebildet sein, dass die Bewegungsgeschwindigkeit von der Eintragsseite zur Austragsseite veränderbar ist. So kann die Bewegungsgeschwindigkeit zunächst im Bereich der Eintragsseite niedrig gewählt werden, während sie im Bereich der Austragsseite höher als an der Eintragsseite gewählt wird. Dies führt bei einem kontinuierlichen Materialfluss auch dazu, dass die Dicke bzw. Höhe des zu trocknenden Gutes auf der Trocknungsfläche in der Trocknungshalle 18 in Richtung der Austragsseite abnimmt, so dass nach einer entsprechenden Grobentfeuchtung an der Eintragsseite an der Austragsseite die endgültige Trocknung auf den gewünschten Restfeuchtegehalt erfolgt.

Insgesamt können bei der Trocknungsanlage durch Einstellung der Temperatur in den einzelnen Trocknungsfeldern 17, der Schütthöhe des zu trocknenden Materials und der Fördergeschwindigkeit des zu trocknenden Materials von der Eintragsseite zur Austragsseite die zu erzielenden Trocknungseigenschaften eingestellt werden, um beispielsweise aus Schlamm Brennstoff herzustellen.

Die Trocknungshalle 18 weist neben der Trocknungsfläche mit den Trocknungsfeldern 17 in Form einer Fußbodenheizung unter oder in einer Betonplatte eine Gebäudehülle mit einer Stahlkonstruktion auf, bei der zumindest teilweise die Seiten und/oder Giebelwände mit transparenten Kunststoff-Hohlkammerplatten, insbesondere PVC-Hohlkammerplatten ausgebildet sind, die zum einen eine gute Wärmedämmung gewährleisten und zum anderen bei Sonneneinstrahlung eine Wärmeerzeugung garantieren.

Die Trocknungshalle 18 ist auch im Bereich der Bodenplatte mit einer Isolierung versehen, um Wärmeverluste nach unten zu vermeiden.

Die Dachkonstruktion kann als Satteldach ausgeführt sein oder in jeder anderen geeigneten Dachform.

Auf den Dachflächen können Luftkammern ausgebildet sein, die ebenfalls eine gute Wärmeisolierung ermöglichen. Die Luftkammern können durch zwei im Wesentlichen aufeinander liegende Folien, die an den Seiten miteinander verbunden sind, gebildet werden, wobei der durch die Folien eingeschlossene Raum aufblasbar ist, so dass sich eine Luftkammer ergibt, die wärmedämmend ist. Die die Luftkammern bildenden Folien können an der Ober- und Unterseite unterschiedlich sein.

Die obere Folie kann mit einer hohen Lichtdurchlässigkeit ausgebildet sein, so dass die entsprechende Sonneneinstrahlung wiederum zur Wärmegewinnung genutzt wird. Darüber hinaus können VA-Zusätze zur Energieeinsparung vorgesehen sein.

Die untere Folie kann eine insbesondere co-extrudierte Spezialfolie mit Anti-Tau-Additiven, IR-und VA-Zusätzen sein.

Die Trocknungshalle 18 kann durch eine horizontale Abtrennung beispielsweise des Giebelbereichs bei einer Satteldachanordnung in zwei übereinander liegende Räume unterteilt werden, wobei der untere Raum den eigentlichen Trocknungsraum darstellt, während im Giebelraum bzw. oberen Raum die erforderliche Ansaugluft durch Transport entlang der Längsrichtung der Trocknungshalle vorgewärmt werden kann. Durch die horizontale Abtrennung der Trocknungshalle 18 wird darüber hinaus erreicht, dass der eigentliche Trocknungsraum hinsichtlich seines Volumens klein dimensioniert sein kann, so dass der Energiebedarf zur Heizung des Trocknungsraums klein gehalten werden kann.

Am Ende der Trocknungshalle 18, also an der Austragsseite, an der das zu trocknende Gut aus der Trocknungshalle wieder entfernt wird, ist ein Trockengut-Querförderer 6 vorgesehen, der das Trockengut in Richtung eines mittig angeordneten Austragsförderers 7 bewegt. Der Trockengut-Querförderer kann im Boden eingelassen und beheizbar sein, so dass eine Nachwärmung des Trockenguts erfolgen kann, um eine Hygienisierung des Trockenguts zu erreichen. Damit kann ein keimfreies Endprodukt in Form eines Granulats erhalten werden.

Der Trockengut-Austragsförderer 7 fördert das Trockengut zur Austragsverteilerschnecke 8, die das Trockengut in einem Transportbehälter, wie beispielsweise einen Silo-Tankauflieger 9 verteilt.

Der Silo-Tankauflieger 9 ist über eine Verdrängungsluftleitung mit der Trocknungshalle 18 verbunden, so dass bei der Befüllung des Silo-Tankaufliegers die anfallende Verdrängungsluft in die Trocknungshalle 18 zurückgeführt wird. Damit können Emissionen bei der Ausgabe des getrockneten Guts vermieden werden. In der Verdrängungsluftleitung 10 kann ein Staubfilter vorgesehen sein, um Staub aus der zurückgeführten Luft zu entfernen.

Durch die Kombination der Maßnahmen, die bei der erfindungsgemäßen Trocknungsanlage getroffen werden, und zwar hinsichtlich der Bildung eines abgeschlossenen Systems und der Vermeidung von Emissionen, sowie der energetischen Optimierung mit der Ausnutzung der Sonnenenergie und Abwärme zur Reduzierung des Energiebedarfs sowie der vollautomatisierten Materialflussführung mit entsprechend regel- und/oder steuerbarer Einstellung der Trocknungseinstellungen kann ein optimal getrocknetes Gut bei geringem Energieeinsatz unter Vermeidung von unerwünschten Emissionen erzielt werden.

Hierzu trägt auch bei, dass die Abluft aus der Trocknungshalle 18, welche dem zu trocknenden Gut entzogene Feuchtigkeit enthält, über ein Wärmerückgewinnungssystem mit einem Luft-Luftwärmetauscher 15 geführt wird, um die Abgase abzukühlen und die Ansaugluft zu erwärmen, so dass der Energiebedarf weiter reduziert wird. Außerdem kann damit gewährleistet werden, dass die Abgastemperatur einen gleichbleibenden Wert aufweist, um in den nachgeschalteten Biofiltermodulen 16 optimale Bedingungen zu ermöglichen.

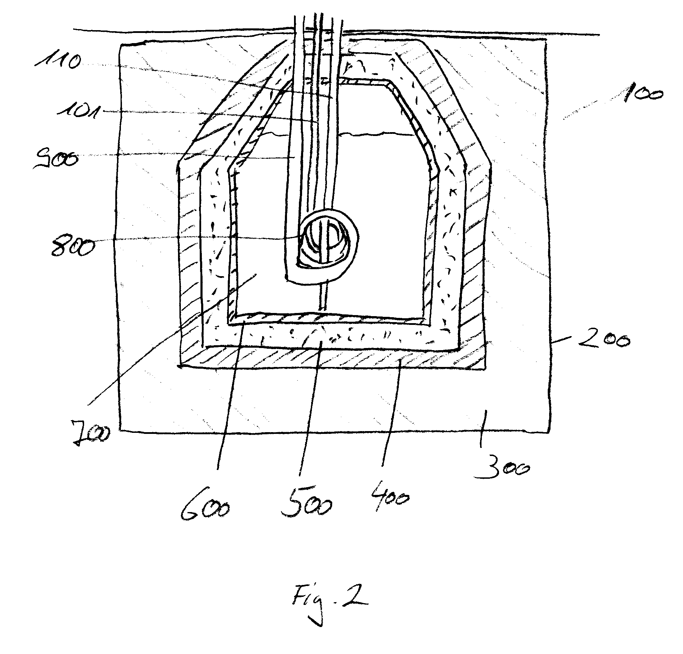

Alternativ oder zusätzlich kann ein Wärmespeicher vorgesehen werden, in dem die aus der Wärmerückgewinnung zurückgewonnene Wärme gespeichert wird. Ein entsprechender Erd-Wärmespeicher, der unterhalb der Erdoberfläche im Erdreich angeordnet sein kann, ist in der Figur 2 dargestellt. Die Figur 2 zeigt einen entsprechenden Speicher 100, der eine wasserdichte Kunststofffolie 200 umfasst, die den Wärmespeicher 100 lediglich mit Ausnahme der Durchführungen für Zu- und ableitungen vollständig umgibt. Die Folie 200 kann aus jedem geeigneten Material gefertigt sein, sollte aber insbesondere schweißbar sein, um die Folie 200 wasserdicht zusammenschweißen zu können, sodass insgesamt eine wasserdichte Hülle gegeben ist.

Weiterhin weist der Erd-Wärmespeicher eine äußere Isolierschicht 300 auf, die beispielsweise aus Schaumglasgranulat gebildet sein kann.

In der Isolierschicht 300 aus Schaumglasgranulat ist ein äußerer Speicherbehälter 400 aus Beton angeordnet. In dem äußeren Behälter 400 aus Beton ist ein innerer Behälter 600, beispielsweise aus Edelstahl, eingesetzt, wobei zwischen dem inneren Behälter 600 und dem äußeren Behälter 400 wiederum eine Isolations- und Dämmschicht 500, beispielsweise aus Polyurethan vorgesehen ist. In dem inneren Behälter 600 ist die Speicherflüssigkeit 700, z. B. Wasser, angeordnet. Die Speicherflüssigkeit 700 kann selbst durch einen Wärmetauscher, also den Abluft-Wärmetauscher der Trocknungsanlage geführt werden oder es kann ein geschlossener Kreislauf mit einer zweiten Speicherflüssigkeit vorgesehen sein, welche im Abluft-Wärmetauscher die Wärme von der Abluft der Trocknungsanlage aufnimmt und im Erd-Wärmespeicher 100 an die Speicherflüssigkeit 700 wieder abgibt. Dies ist in der Figur 2 dargestellt. Bei dieser Ausführungsform ist innerhalb des inneren Speicherbehälters 600 ein Wärmetauscher 800 in Form einer Spiralwendel vorgesehen ist, durch welche eine zweite Speicherflüssigkeit gepumpt werden kann. Die zweite Speicherflüssigkeit kann über den Zulauf 900 in die Wärmetauscherwendel und wird über den Ablauf 101 wieder zum Abluftwärmetauscher der Trocknungsanlage zurückgeführt werden. Zum Befüllen des inneren Behälters 600 mit Speicherflüssigkeit 700 und zum Entnehmen derselben ist eine weitere Rohrleitung 110 vorgesehen. Soll die Speicherflüssigkeit 700 direkt am Abluftwärmetauscher der Trocknungsanlage die Wärme aufnehmen, so genügt es beispielsweise eine Zu- und eine Ableitung für die Speicherflüssigkeit 700 vorzusehen. In der Figur 2 ist außerdem aufgrund der schematischen Darstellung nicht gezeigt, dass der Erd-Wärmespeicher 100 einen entsprechenden Revisionszugang aufweisen kann.

Durch die vollständige Isolation und Wärmedämmung ist eine effektive Speicherung von Wärme möglich. Insbesondere das Vorsehen der wasserdichten Folie 200 zwischen dem benachbarten Erdreich und der Isolationsschicht 300 aus Schaumglasschotter ermöglicht eine dauerhafte Wärmedämmwirkung des Schaumglasschotters, der eine Vielzahl von feinsten Lufteinschlüssen aufweist und dadurch eine besonders gute Wärmedämmwirkung aufweist. Eine entsprechende Isolations- und Dämmschicht mit einer umhüllenden wasserdichten Folie und einer Lage aus Glasschaumschotter kann auch zur Wärmedämmung unterhalb der Trocknungshalle vorgesehen werden.

Das abgekühlte Gas wird in einen Befeuchter bzw. Wäscher sowie Konditionierer und Tropfenabscheider 12 eingeführt, wo das Abgas gewaschen wird. Als Waschmedium dient Wasser oder ein Konditionierungsmittel. Bei einem Gehalt des Abgases von NH₃-Anteilen von mehr als 30 mg pro m³ kann das Wasser zusätzlich eingesäuert werden. Auf einen Wäscher kann bei Werten des NH₃-Anteils kleiner 10 mg pro m³ auch verzichtet werden.

Nach Durchlauf des Wäschers, in dem das Abgas mindestens für eine Zeit von 2 bis 5 Sekunden verbleibt, gelangt das Gas in Biofiltermodule zur weiteren Reinigung des Abgases. Das Abgas durchströmt dabei das in einem Container aufgeschüttete bzw. aufgeschichtete Biofiltermaterial, welches aus gerissenem Wurzelholz und einer Schicht Fichtenrinde bestehen kann. Bei einer Temperatur von 18 °C bis 30 °C durchströmt das Gas den entsprechenden Biofilter für mindestens 30 Sekunden. Durch eine Reaktion des Abgases im Biofilter, beispielsweise eine biochemische Oxidation aufgrund von Bakterien, Pilzen oder Hefen wird eine Reinigung des Abgases und insbesondere eine Reduzierung der Geruchsbelastung erreicht.

Durch eine geeignete Prozessführung mit Kombination der Abkühlung des Abgases der Trocknungsanlage, also der mit Feuchtigkeit beladenen Luft, der Mischung mit Frischluft und/oder ungekühlter Abluft kann sichergestellt werden, dass die Temperatur des in der Abgasreinigungsanlage zu reinigenden Abgases in einem konstanten Temperaturbereich liegt, sodass die entsprechenden Mikroorganismen der Biofilter auf diesen Temperaturbereich eingestellt werden und in diesem Temperaturbereich optimal arbeiten können.

Wie der beigefügten Figur 1 zu entnehmen ist, können mehrere Biofiltermodule hintereinander geschaltet sein.

Bei dem gezeigten Ausführungsbeispiel ist weiterhin ein Modul 14 zur photolytischen Oxidation (UV-C-Entkeimung) vorgesehen, bei der durch die entsprechende Oxidation von organischem Material eine Sterilisation und Beseitigung von Geruchsstoffen erfolgt. Entsprechend kann gereinigte Abluft über den Kamin 13 an die Umgebung abgegeben werden, die keinerlei Beeinträchtigung der Umgebung darstellt.

Insgesamt ist somit mit der erfindungsgemäßen Trocknungsanlage ein System bereitgestellt, welches hinsichtlich der Energiebilanz sehr effizient arbeitet und durch die Vermeidung von Emissionen eine hohe Akzeptanz erzielt.

Obwohl die vorliegende Erfindung anhand des Ausführungsbeispiels detailliert beschrieben worden ist, ist es für einen Fachmann selbstverständlich, dass die Erfindung nicht auf dieses Ausführungsbeispiel beschränkt ist, sondern dass vielmehr im Rahmen des Schutzbereichs der beigefügten Ansprüche Abwandlungen in der Weise vorgenommen werden können, dass andersartige Kombinationen einzelner vorgestellter Merkmale als auch das Weglassen einzelner Merkmale vorgenommen werden können, ohne den Schutzbereich zu verlassen. Die vorliegende Erfindung beansprucht insbesondere jegliche Kombination aller vorgestellter Merkmale.

## Patentansprüche

1. Trocknungsanlage für Biomasse und/oder Schlämme (Trocknungsgut) mit einer Trocknungshalle (18) mit beheiztem Boden und einer Gebäudehülle, die zumindest teilweise Sonneneinstrahlung in Wärmeenergie umsetzt, einer Beschickungsvorrichtung (1, 2, 3, 4) zur Beschickung der Trocknungshalle mit Biomasse und/oder Schlamm, einer Verteil-und Transportvorrichtung (5) zur Bewegung der Biomasse und/oder des Schlamms durch die Trocknungshalle und zur Verteilung und Umwälzung des Trocknungsguts, wobei ein Abluft-Wärmetauscher (15) und ein Abluft-Reinigungssystem für die mit der Feuchtigkeit des zu trocknenden Gutes angereicherte Abluft der Trocknungsanlage (12, 14, 16) vorgesehen sind **dadurch gekennzeichnet, dass** eine automatisierte Entnahmevorrichtung (6, 7, 8) für das getrocknete Gut angeordnet ist, die mit Verdrängungsluftrückführung (10) ausgestattet ist, so dass bei der Befüllung einer Transportbehälter (9) die anfallende Verdrängungsluft in die Trocknungshalle (18) zurückgeführt wird.

2. Trocknungsanlage nach Anspruch 1,
**dadurch gekennzeichnet, dass**
die Beschickungsvorrichtung einen abschließbaren Annahmebunker (11) umfasst.

3. Trocknungsanlage nach einem der vorhergehenden Ansprüche,
**dadurch gekennzeichnet, dass**
das Abluftreinigungssystem einen Befeuchter, Wäscher, Konditionierer und/oder Tropfenabscheider (12) umfasst.

4. Trecknungsanlage nach einem der vorhergehenden Ansprüche,
**dadurch gekennzeichnet, dass**
das Abluftreinigungssystem mehrere Biofiltermodule (16) umfasst.

5. Trocknungsanlage nach einem der vorhergehenden Ansprüche,
**dadurch gekennzeichnet, dass**
das Ablnstreinigungssystem einen Reaktor (14) für die photolytische Oxidation der Abluft umfasst.

6. Trocknungsanlage nach einem der vorhergehenden Ansprüche,
**dadurch gekennzeichnet, dass**
die Gebäudehülle transparente Teile umfasst, mittels derer eine direkte Solarheizung gegeben ist.

7. Trocknungsanlage nach einem der vorhergehenden Ansprüche,
**dadurch gekennzeichnet, dass**
die Gebäudehülle Luftkammern aus einem von einer Folie umgebenen Volumen umfasst, wobei die Luftkammer aus mindestens zwei unterschiedlichen Folien gebildet ist, nämlich einer nach außen gerichteten Folie mit hoher Lichtdurchlässigkeit, hoher Reißfestigkeit und VA-Zusätzen und einer nach innen gerichteten Folie mit Anti-Tau-Additiven sowie IR- und VA-Zusätzen.

8. Trocknungsanlage nach einem der vorhergehenden Ansprüche,
**dadurch gekennzeichnet, dass**
die Trocknungshalle durch eine abgehängte Decke in mindestens zwei getrennte Räume unterteilt ist.

9. Verfahren zum Betrieb einer Trocknungsanlage nach einem der vorhergehenden Ansprüche,
bei welchem die zu trocknende Biomasse und/oder der Schlamm in einen Annahmebunker eingefüllt werden, automatisch auf eine Trocknungsfläche aufgebracht und auf dieser bewegt werden und automatisch nach der Trocknung entnommen werden, so dass ein vollautomatisierter Betrieb gewährleistet ist,
**dadurch gekennzeichnet, dass**
die Bewegungsgeschwindigkeit der zu trocknende Biomasse und/oder des Schlamms am Beginn der Bewegung über die Trocknungsfläche langsam und zum Ende hin schneller erfolgt.

10. Verfahren nach Anspruch 9,
**dadurch gekennzeichnet, dass**
die Trocknung in einem abgeschlossenen System durchgeführt wird, so dass keine unerwünschten Freisetzungen von Stoffen, Flüssigkeiten oder Gasen erfolgen und/oder die Abwärme zumindest teilweise zurück gewonnen wird.

11. Verfahren nach Anspruch 9 oder 10,
**dadurch gekennzeichnet, dass**
die Abluft aus der Trocknungsanlage in einem konstanten Temperaturbereich gehalten und einem Abluft-Reinigungssystem mit Biofiltern zugeführt wird.

## Claims

1. Drying facility for biomass and/or sludge (drying material) comprising a drying hall (18) with heated floor and a building envelope, which at least partially transforms sunlight into thermal energy; a feeding device (1, 2, 3, 4) for feeding the drying hall with biomass and/or slurry; a distribution and transport device (5) for moving the biomass and/or the slurry through the drying hall and for distributing and circulating the drying material, wherein an exhaust air heat exchanger (15) and an exhaust air cleaning system are provided for the exhaust air of the drying facility (12, 14, 16) enriched with the moisture of the drying material,
**characterised by the fact that**
an automated removal device (6, 7, 8), the purpose of which is to remove the dried material and which is fitted with a displaced air return (10), is disposed such that the air displaced during filling of a transport container (9) is returned to the drying hall (18).

2. Drying facility in accordance with claim 1,
**characterised by the fact that**
the feeding device comprises a sealable delivery bunker (11).

3. Drying facility in accordance with any of the previous claims,
**characterised by the fact that**
the exhaust air cleaning system comprises a humidifier, scrubber, conditioning unit and/or demister (12).

4. Drying facility in accordance with any of the previous claims,
**characterised by the fact that**
the exhaust air cleaning system comprises several biofilter modules (16).

5. Drying facility in accordance with any of the previous claims,
**characterised by the fact that**
the exhaust air cleaning system comprises a reactor (14) for photolytic oxidation of the exhaust air.

6. Drying facility in accordance with any of the previous claims,
**characterised by the fact that**
the building envelope comprises transparent sections by means of which direct solar heating occurs.

7. Drying facility in accordance with any of the previous claims,
**characterised by the fact that**
the building envelope comprises air chambers from a volume bounded by plastic film, wherein the air chambers are formed from at least two different plastic films, namely an outwardly facing plastic film of high light permeability, high tear strength and VA additives, and an inwardly facing plastic film with anti-dew additives as well as IR and VA additives.

8. Drying facility in accordance with any of the previous claims,
**characterised by the fact that**
the drying hall is subdivided into at least two rooms by a suspended ceiling.

9. Method for operating a drying facility in accordance with any of the previous claims in which the biomass and/or sludge for drying is filled into a delivery bunker, transferred to a drying surface and moved thereon, and automatically removed after drying, such that fully automated operation is ensured,
**characterised by the fact that**
the biomass and/or sludge for drying moves over the drying surface slowly at first and speeds up towards the end.

10. Method in accordance with claim 9,
**characterised by the fact that**
drying is performed in a closed system, such that no undesirable release of substances, liquids or gases occurs and/or the exhaust heat is at least partially recovered.

11. Method in accordance with claim 9 or 10,
**characterised by the fact that**
the exhaust air from the drying facility is maintained within a constant temperature range and is fed to an exhaust air cleaning system fitted with biofilters.

## Revendications

1. Installation de séchage pour biomasse et/ou boues (matières à sécher), avec un hall de séchage (18) avec un sol chauffé et une enveloppe de bâtiment qui transforme au moins partiellement du rayonnement solaire en énergie calorifique, avec un dispositif de chargement (1, 2, 3, 4) pour charger le hall de séchage en biomasse et/ou en boue, avec un dispositif de répartition et de transport (5) pour déplacer la biomasse et/ou la boue à travers le hall de séchage et pour répartir et faire circuler les matières à sécher, cependant qu'un échangeur thermique à air d'évacuation d'air (15) et un système d'épuration de l'air vicié pour l'air vicié enrichi de l'humidité des matières à sécher de l'installation de séchage (12, 14, 16) sont prévus, **caractérisée en ce qu'**un dispositif de prélèvement automatisé (6, 7, 8) est placé pour les matières séchées qui est équipé d'une recirculation de l'air de refoulement (10) si bien que, lors du remplissage d'un conteneur de transport (9), l'air de refoulement produit est remis en circulation dans le hall de séchage (18).

2. Installation de séchage selon la revendication 1, **caractérisée en ce que** le dispositif de chargement comprend un réservoir de réception (11).

3. Installation de séchage selon l'une des revendications précédentes, **caractérisée en ce que** le système d'épuration de l'air vicié comprend un humidificateur, un laveur, un conditionneur et/ou un séparateur de gouttes (12).

4. Installation de séchage selon l'une des revendications précédentes, **caractérisée en ce que** le système d'épuration de l'air vicié comprend plusieurs modules de biofiltres (16).

5. Installation de séchage selon l'une des revendications précédentes, **caractérisée en ce que** le système d'épuration de l'air vicié comprend un réacteur pour l'oxydation photolytique de l'air vicié.

6. Installation de séchage selon l'une des revendications précédentes, **caractérisée en ce que** l'enveloppe du bâtiment comprend des parties transparentes au moyen desquelles un chauffage solaire direct est donné.

7. Installation de séchage selon l'une des revendications précédentes, **caractérisée en ce que** l'enveloppe du bâtiment est formée par un volume entouré par une feuille, la chambre d'air étant formée par au moins deux feuilles différentes, à savoir par une feuille orientée vers l'extérieur avec une grande perméabilité à la lumière, une grande résistance à la déchirure et VA suppléments et par une feuille orientée vers l'intérieur avec des additifs anti-rosée ainsi que des IR et VA suppléments.

8. Installation de séchage selon l'une des revendications précédentes, **caractérisée en ce que** le hall de séchage est divisé par un plafond surbaissé en au moins deux salles séparées.

9. Procédé pour le fonctionnement d'une installation de séchage selon l'une des revendications précédentes pour lequel la biomasse à sécher et/ou la boue sont remplies dans un réservoir de réception, sont automatiquement amenées sur une surface de séchage et sont déplacées sur celle-ci et sont automatiquement enlevées après le séchage si bien qu'un fonctionnement entièrement automatisé est garanti, **caractérisé en ce que** la vitesse de déplacement de la biomasse à sécher et/ou de la boue est lente, au début du mouvement sur la surface de séchage et est plus rapide vers la fin.

10. Procédé selon la revendication 9, **caractérisé en ce que** le séchage est effectué dans un système clos si bien qu'il n'y a pas de dégagements non souhaitées de substances, de liquides ou de gaz et/ou que la chaleur perdue est au moins partiellement récupérée.

11. Procédé selon la revendication 9 ou 10, **caractérisé en ce que** l'air vicié de l'installation de séchage est maintenu dans une plage de température constante et est amené à un système d'air vicié avec des biofiltres.
